# FASCICULE DE BREVET EUROPEEN

(11) **EP 3 891 255 B1**
(45) Date de publication et mention de la délivrance du brevet: **17.08.2022**
(21) Numéro de dépôt: 19809868.3
(22) Date de dépôt: 04.12.2019
(51) Int. Cl.: B01D 15/00, C10G 25/00, B01J 20/26, G01N 1/40

(54) **MÉTHODE DE SÉPARATION DE POLYMÈRES DANS UN MÉLANGE D'HYDROCARBURES**
VERFAHREN ZUR TRENNUNG VON POLYMEREN IN EINEM KOHLENWASSERSTOFFGEMISCH
METHOD FOR SEPARATING POLYMERS IN A HYDROCARBON MIXTURE

(30) Priorité: 05.12.2018 FR 1872364
(43) Date de publication de la demande: 13.10.2021
(73) Titulaire: TotalEnergies OneTech, 92400 Courbevoie (FR)
(72) Inventeur: BAI, Yang, 69350 LA MULATIERE (FR); BOUVAREL, Thomas, 75015 PARIS (FR); PICHON, Valérie, 92100 Boulogne Billancourt (FR)
(74) Mandataire: Lavoix
(86) Numéro de dépôt international: PCT/EP2019/083609
(87) Numéro de publication internationale: WO 2020/115101

(56) Documents cités:
- WO-A1-2018/175143
- US-A1- 2007 251 864
- US-A1- 2010 300 938
- US-A1- 2015 136 660

## Description

La présente invention concerne une méthode de séparation et de détermination de la quantité de polymères cibles dans un mélange d'hydrocarbures.

Les carburants sont des mélanges d'hydrocarbures issus du raffinage de pétrole brut. Pour l'utilisation de ces mélanges d'hydrocarbures, notamment pour les utilisations automobile sous forme de carburant (essence ou gazole), des molécules de synthèse, appelées additifs, sont ajoutées en faibles proportions. Ces additifs permettent par exemple d'améliorer les performances des carburants, de passer des tests de base, etc.

Il y a un intérêt à pouvoir analyser les mélanges d'hydrocarbures pour déterminer notamment la nature et la quantité des additifs, notamment additifs polymériques, mis en œuvre.

Cependant, ces mélanges d'hydrocarbures sont des mélanges complexes et il est délicat de pouvoir extraire de façon sélective des composés particuliers ou classes de composés, notamment des polymères.

Il y a donc un intérêt à fournir une méthode de séparation de composés, notamment polymères, dans un mélange d'hydrocarbures, notamment essence ou gazole.

US 2015/136660 A1, US 2007/251864 A1, WO 2018/175143 A1 et US 2010/300938

A divulguent des procédés de traitement d'hydrocarbures par adsorption à l'aide d'adsorbants polymères.

Un objectif de la présente invention est donc de fournir une méthode de séparation de composés dans un mélange d'hydrocarbures. Un autre objectif de la présente invention est également de fournir une telle méthode permettant la séparation de composés polymériques, notamment d'additifs polymériques.

Un autre objectif de la présente invention est également de fournir un matériau utilisation en tant que phase stationnaire dans une méthode d'extraction solide, permettant la séparation de composés, notamment polymères, dans un mélange d'hydrocarbures.

D'autres objectifs encore apparaîtront à la lecture de la description de l'invention qui suit.

Ces objectifs sont remplis par la présente demande qui concerne une méthode d'extraction de polymère(s) cible(s) compris dans un mélange d'hydrocarbures comprenant une étape d'extraction en phase solide du mélange d'hydrocarbures, la phase stationnaire de l'extraction en phase solide étant un polymère (P) obtenu à partir d'acide méthacrylique, ledit polymère (P) étant différent d'un polymère à empreinte.

Sans vouloir être lié par une quelconque théorie, l'extraction en phase solide est une méthode dans laquelle une solution comprenant différents composés (phase liquide) passe à travers une phase solide, l'affinité des composés avec la phase solide (absorption sélective de certains composés de la phase liquide par la phase solide) permet leur rétention et par conséquent leur séparation. Dans le cadre de la présente demande, la phase liquide est le mélange d'hydrocarbures comprenant des polymères et la phase solide est le polymère (P).

Dans le cadre de la présente invention, on entend par mélange d'hydrocarbures les mélanges issus du raffinage du pétrole brut. La composition chimique de ces mélanges varie notamment en fonction de la provenance géographique mais ils comprennent tous des composés aromatiques de la famille du benzène, des alcènes, des alcanes et des cycloalcanes. Comme exemple particulier des mélanges d'hydrocarbures on peut notamment citer :
- les compositions d'essence qui comprennent des hydrocarbures légers avec majoritairement de l'heptane et éventuellement des composés oxygénés organiques dans une quantité de préférence inférieure ou égale à 3,7% en volume ;
- les compositions de gazole comprenant des hydrocarbures plus lourds essentiellement cétane et éventuellement des esters méthyliques d'acides gras dans une proportion maximale de 8% en volume.

Ces mélanges d'hydrocarbures, peuvent comprendre, en plus des polymères cibles mentionnés ci-dessus, des additifs (différents des polymères cibles) de tout type permettant d'améliorer les propriétés des mélanges, comme par exemple des détergents, des huiles porteuses, des additifs pour l'amélioration de la teneur à froid, des modificateurs de frottement, des anti-odeurs, etc.

Les polymères cibles compris dans le mélange d'hydrocarbures sont des additifs utilisés dans les mélanges d'hydrocarbures pour apporter des propriétés particulières telles que par exemple l'amélioration des performances, notamment le maintien de la propreté du moteur, notamment en limitant ou évitant la formation des dépôts ou en réduisant les dépôts déjà présents dans les parties internes du moteur à combustion.

De préférence, les polymères cibles selon l'invention ne comprennent pas de soufre.

La méthode selon l'invention est particulièrement adaptée pour l'extraction de polymères cibles présentant de préférence une masse molaire comprise entre 500 et 4000 g/mol, de préférence entre 1000 et 2000 g/mol. De manière particulièrement préférée, les polymères cibles selon l'invention sont des polymères comprenant une tête hydrophile polaire, de préférence de petite taille, par exemple comprise entre 15 et 150 g/mol, de préférence entre 20 et 60 g/mol, et une chaîne lipophile hydrocarbonée non polaire. Le polymère cible peut également comprendre des cycles par exemple pyrrolidone. La tête hydrophile polaire est de préférence une fonction amine (NH2 ou amine quaternaire). De préférence, la méthode selon l'invention est particulièrement bien adaptée pour les polymères cibles présentant une fonction amine, notamment NH2, tel que par exemple un groupe ((CH₂)₂NH)ₓ-(CH₂)_{y}-NH₂ dans lequel x est un entier compris entre 1 et 20 de préférence entre 2 et 10 et y est un entier compris entre 1 et 8, de préférence entre 2 et 5, ou un groupe CH2-CH(CH2CH3)-NH2 .

Le polymère (P) utilisé comme phase stationnaire de l'extraction en phase solide est de préférence obtenu à partir d'acide méthacrylique en présence d'un agent réticulant, par exemple éthylène glycol dimethacrylate (EGDMA), et d'un initiateur, par exemple azobisisobutyronitrile (AIBN). Avantageusement, le ratio molaire monomère (notamment acide méthacrylique) /agent réticulant est compris entre 1/1 et 1/10, de préférence entre 1/1 et 1/8, de manière plus préférée entre 1/2 et 1/7, de manière encore plus préférée le ratio molaire monomère /agent réticulant est de 1/5. Le polymère (P) est de préférence obtenu dans un solvant polaire par exemple acétonitrile ou un solvant comprenant de l'acétonitrile, par exemple un mélange alcool/acétonitrile (notamment éthanol/acétonitrile) ou un mélange eau/acétonitrile. Le polymère (P) est de préférence obtenu à une température comprise entre 50 et 90°C. De préférence, le polymère (P) est obtenu par un procédé comprenant :
- une étape d'initiation thermique à 60°C pendant 24 heures ;
- une étape de broyage et de tamisage des polymères obtenus par exemple broyage automatique à 30 impulsions pas seconde pendant 1,5 minutes et le tamisage est automatique avec une amplitude de 9 mm/g pendant 3 x 1 minute.

La méthode d'extraction phase solide (ou SPE en anglais pour solid phase extraction) comprend de préférence les étapes suivantes :
a) fourniture d'une cartouche d'extraction en phase solide comprenant le polymère (P) ;
b) conditionnement de la cartouche ;
c) percolation du mélange d'hydrocarbures comprenant le(s) polymère(s) cible(s);
d) lavage de la cartouche ;
e) élution de la cartouche.

L'étape b) de conditionnement permet de mouiller la phase solide. Le solvant utilisé pour le conditionnement de l'étape b) peut être tout solvant connu de l'homme du métier, il est de préférence choisi parmi les solvants de lavage et élution tels que le dichlorométhane le méthanol ou l'acétonitrile, de préférence le dichlorométhane.

L'étape c) de percolation permet l'absorption des polymères de la phase liquide sur la phase stationnaire. Durant cette étape la phase liquide est de préférence percolée à une vitesse faible, notamment goutte à goutte, comprise entre 0,5 et 1ml/min. Pour maximiser l'absorption de polymère sur la phase stationnaire, et éliminer les problèmes de saturation, il convient de mettre en œuvre au moins 2 ml de mélanges d'hydrocarbures pour 300 mg de phase stationnaire, de préférence de préférence 2 ml de mélanges d'hydrocarbures pour 300 mg de phase stationnaire.

L'étape d) de lavage de la cartouche permet l'élimination des composés interférents retenus sur la phase solide tout en maintenant la rétention du (des) polymère(s) cible(s). Le solvant mis en œuvre dans cette étape d) peut être tout solvant connu de l'homme du métier, peu éluant vis-à-vis des interactions polymères cibles/phase solide et qui permettent d'éluer les composés interférents. De préférence, les solvants sont choisis parmi les solvants présentant une polarité comprise entre celle de l'heptane et celle de l'acétonitrile, par exemple un mélange acétonitrile et méthanol, notamment un mélange compris entre 40 et 80 % en volume d'acétonitrile et 20 à 60 % en volume de méthanol.

L'étape d) peut être répétée plusieurs fois, par exemple de 3 à 6 fois.

L'étape e) d'élution permet de rompre les interactions entre la phase solide et le(s) polymère(s) cible(s). Le solvant mis en œuvre dans cette étape e) peut être tout solvant connu de l'homme du métier pour solubiliser le(s) polymère(s) cible(s) et notamment les solvants polaires, par exemple un mélange de solvant organique comprenant des acides, par exemple tetrahydrofurane (THF).

L'étape e) peut être répétée plusieurs fois, par exemple de 1 à 3 fois.

A la suite de l'étape e) une solution comprenant le(s) polymère(s) cible(s) est obtenue. Une analyse de cette solution, notamment par spectrométrie, par exemple spectrométrie de masse ou spectrométrie UV permet de confirmer la nature du (ou des) polymère(s) récupéré(s). L'aire du pic du chromatogramme obtenu permet avantageusement de déterminer la concentration en polymère par lecture sur une courbe d'étalonnage préalablement réalisée.

La présente invention concerne également une méthode de détermination de la teneur en polymères cibles dans un mélange d'hydrocarbures comprenant les étapes suivantes :
1) réaliser une courbe d'étalonnage avec au moins deux, de préférence au moins cinq, solutions de concentrations connues en polymères cibles en analysant chacune des solutions par spectrométrie (par exemple masse ou UV) et en reliant l'aire sous le pic du chromatogramme avec la concentration en polymères cibles ;
2) mettre en œuvre le procédé d'extraction de l'invention sur un mélange d'hydrocarbures comprenant le(s) polymère(s) cible(s) par lequel une solution de polymère(s) cible(s) est obtenue ;
3) analyser la solution de polymère(s) cible(s) obtenue à l'étape 2) par spectrométrie ;
4) reporter l'aire sous la courbe du chromatogramme obtenue à l'étape 3) sur la courbe d'étalonnage de l'étape 1) ;
5) déterminer la concentration en polymère(s) cible(s) du mélange d'hydrocarbures.

De façon particulièrement préférée, la spectrométrie est une spectrométrie UV ou masse. La spectrométrie UV est réalisée à une longueur d'onde correspondant à la longueur d'onde d'absorption du (ou des) polymère(s) cible(s), par exemple entre 200 et 300 nm, par exemple 230 nm.

La présente invention concerne également l'utilisation du polymère (P) décrit ci-dessus comme phase solide dans un procédé d'extraction en phase solide de polymères dans un mélange d'hydrocarbures. Le mélange d'hydrocarbures et les polymères étant tels que définis ci-dessus.

Ainsi, la présente invention concerne l'utilisation du polymère (P) selon l'invention dans une méthode de détermination de la teneur en polymère(s) cible(s) dans un mélange d'hydrocarbures.

La présente invention va maintenant être décrite à l'aide d'exemples non limitatifs.

### Exemple 1 : Préparation du polymère (P)

Le monomère mis en œuvre est l'acide méthacrylique, l'agent réticulant l'EGDMA, le solvant l'acétonitrile, et l'initiateur l'AIBN.

Le ratio molaire monomère/agent réticulant est de 1/5.

Tous les réactifs nécessaires à la synthèse sont introduits dans un flacon : monomère, agent réticulant, solvant et initiateur. Les réactifs sont mélangés pour obtenir une solution limpide. Puis cette dernière est transvasée dans un tube à sceller, plongée dans de la glace et dégazée sous un flux d'azote pendant 15 min. Cette étape permet d'éliminer l'oxygène dissout susceptible de produire des radicaux libres qui perturberaient la polymérisation. Le flacon est ensuite scellé avec de l'aluminium et du parafilm pour que l'air ne puisse plus pénétrer à l'intérieur.

Premier jour : les tubes sont placés au bain-marie à 60°C pour procéder à une initiation thermique pendant 24 h.

Deuxième jour : une étape de séchage qui permet d'éliminer les molécules d'eau libérées lors de l'étape de condensation. Le flacon est débouché et laissé pendant 3 h à l'air libre puis il est placé dans une étuve à 60°C pendant 18 h.

Troisième jour, broyage et tamisage des polymères obtenus sous forme de bloc qu'il faut récupérer en cassant les tubes à sceller à l'aide d'un marteau. Le broyage est réalisé de façon automatique à 30 impulsions par seconde pendant 1,5 min et le tamisage est lui aussi réalisé automatiquement avec une amplitude de 9 mm/g pendant 3 x 1 min. le but est d'obtenir des particules dont la granulométrie est comprise entre 25 et 36 µm. La sédimentation est ensuite effectuée afin d'éliminer les particules trop fines encore présentes dans la poudre obtenue après le tamisage. Pour cela, un mélange de 20 mL eau/MeOH (20/80, v/v) est versé dans les flacons qui sont agités par retournement pour que les particules de polymère se dispersent. Il faut ensuite attendre 20 min durant lesquelles se produit la décantation des particules les plus grosses et le surnageant est éliminé. Cette opération est réalisée trois fois, puis on laisse sécher les particules de polymère.

### Exemple 2 : séparation d'un polymère cible 1

Le polymère cible 1 comprend un PIBSI (Polyisobutylène succinimide) de Mn 1000 g/mol.

Le polymère (P) de l'exemple 1 a été placé dans une cartouche de polypropylène (300 mg de polymère (P)) entre deux frittés.

La cartouche a tout d'abord été conditionnée avec 10 ml d'heptane.

Trois matrices gasoil ont été utilisées :
G1 : une solution de gasoil B7 dopée à 1000 µg/mL avec le polymère cible a été diluée à 1/10 dans de l'heptane
G2 : une solution de gasoil B7 dopée à 200 µg/mL avec le polymère cible a été diluée à 1/2 dans de l'heptane
G3 : une solution de gasoil B7 dopée à 100 µg/mL avec le polymère cible

Chacune des trois compositions de gasoil a été percolée sur la cartouche.

Deux lavages ont été réalisés avec des solutions de forces éluantes croissantes de dichlorométhane dans l'heptane (20/80 puis 60/40). Un troisième lavage a été effectué avec du dichlorométhane pur. Puis trois lavages DCM/ACN en mélange respectivement de 80/20, 60/40 et 40/60 (DCM : dichlorométhane, ACN : acétonitrile).

L'élution a été réalisée avec 2x2 mL d'un mélange ACN/DCM (60/40) + 5% d'acide formique (AF).

Ces trois procédures ont conduit aux mêmes résultats, c'est-à-dire à l'élimination totale de la matrice gasoil au bout du sixième lavage et une perte quasi nulle du polymère cible dans les fractions de percolation et de lavage. Un taux de récupération dans les fractions d'élutions de 90% a été calculé pour le procédé mis en œuvre avec G3.

### Exemple 3 : séparation d'un polymère cible 2

Le polymère cible 2 est un polyétheramine.

Le polymère (P) de l'exemple 1 a été placé dans une cartouche de polypropylène (300 mg de polymère (P)) entre deux frittés.

La cartouche a tout d'abord été conditionnée avec 10 ml de heptane.

Une matrice gasoil a été utilisée :
G4 : 2 mL de gasoil B7 dopé à 100 µg/mL avec le polymère cible 2 a été préparé.

Une première étape de lavage avec une solution DCM/Heptane (20/80) a été réalisée puis répété une seconde fois un troisième lavage DCM/Heptane (60/40) a également été réalisé deux fois. Ensuite, un cinquième lavage a été réalisé avec du dichlorométhane pur avant un dernier lavage ACN/DCM (20/80). Enfin, l'élution a été réalisée par un mélange ACN/DCM (60/40) + 5% AF.

Un taux de récupération de 95% du polymère cible 2 a été quantifié dans la première fraction d'élution.

### Exemple 4 : séparation simultanée des polymères cibles 1 et 2

Avant de procéder à une extraction des additifs en phase solide, il a été nécessaire d'analyser en LC-UV une solution étalon contenant les deux composés afin de vérifier que ceux-ci étaient identifiables. Pour ce faire, une solution a été préparée à 1000 µg/mL pour chaque polymère cible dans le THF. Cette concentration correspond à la valeur attendue dans le cas d'un taux de récupération de 100% pour une fraction de gasoil dopée à 100 µg/mL en prenant en compte le facteur d'enrichissement de 10 lors de l'évaporation et de la re-suspension. Les deux polymères cibles présentent des temps de rétention respectivement de 14 et 16 minutes.

Le polymère (P) de l'exemple 1 a été placé dans une cartouche de polypropylène (300 mg de polymère (P)) entre deux frittés.

La cartouche a tout d'abord été conditionnée avec 10 ml d'heptane.

Une solution de 2 mL gasoil B7 dopée à 100 µg/mL pour chaque polymère cible est utilisée.

Les lavages et élutions sont identiques à ceux de l'exemple 3.

Aucune perte d'additif n'est observable dans les fractions de percolation et de lavage. Le taux de récupération de chacun des additifs est compris entre 90 à 100%.

### Exemple 5 : Méthode de détermination de la quantité en polymères cibles

Des droites d'étalonnages ont été réalisées pour les polymères cibles 1 et 2. Pour cela, une solution mère de 10000 µg/mL a été préparée pour chaque polymère cible dans le THF. Ensuite, une gamme de cinq concentrations différentes a été réalisée dans le même solvant à partir de cette solution mère (200-400-600-800-1000 µg/mL).

La gamme a été injectée en LC-UV sur une colonne GPC Styragel HR 1 (7.8 mm X 300 mm, 5 µm, 100-5000 Da) utilisée en mode isocratique avec une phase mobile constituée de THF à un débit de 0,4 mL/min et une température de 40°C. La longueur d'onde de détection a été fixée à 230 nm après l'étude de spectres d'absorption UV.

Le temps de rétention est de 14 min pour le polymère cible 1 et de 16 min pour le polymère cible 2. Les droites d'étalonnages correspondantes ont donc pu être déterminées.

Sur la base de ces droites il est possible de reporter ensuite l'aire des pics des chromatogrammes obtenus après extractions des mélanges d'hydrocarbures (aire UA est 12,000,000 pour le polymère cible 1 à 1000 ug/ml, 32,000,000 pour polymère cible 2 à 1000 ug/ml).

## Revendications

1. Méthode d'extraction de polymère(s) cible(s) compris dans un mélange d'hydrocarbures comprenant une étape d'extraction en phase solide du mélange d'hydrocarbures, la phase stationnaire de l'extraction en phase solide étant un polymère (P) obtenu à partir d'acide méthacrylique, ledit polymère (P) étant différent d'un polymère à empreinte.

2. Méthode selon la revendication 1 dans lequel le polymère cible ne comprend pas de soufre.

3. Méthode selon la revendication 1 ou 2, dans laquelle les polymères cibles présentent une masse molaire comprise entre 500 et 4000 g/mol, de préférence entre 1000 et 2000 g/mol.

4. Méthode selon l'une quelconque des revendications 1 à 3, dans laquelle les polymères cibles sont des polymères comprenant une tête hydrophile polaire, de préférence de petite taille comprise entre 15 et 150 g/mol, de préférence entre 20 et 60 g/mol, et une chaîne lipophile hydrocarbonée non polaire.

5. Méthode selon l'une quelconque des revendications 1 à 4, dans laquelle le polymère (P) est obtenu à partir d'acide méthacrylique en présence d'un agent réticulant, et d'un initiateur.

6. Méthode selon l'une quelconque des revendications 1 à 5, comprenant les étapes suivantes :
a) fourniture d'une cartouche d'extraction en phase solide comprenant le polymère (P) ;
b) conditionnement de la cartouche ;
c) percolation du mélange d'hydrocarbures comprenant le(s) polymère(s) cible(s);
d) lavage de la cartouche ;
e) élution de la cartouche.

7. Méthode de détermination de la teneur en polymères cibles dans un mélange d'hydrocarbures comprenant les étapes suivantes :
1) réaliser une courbe d'étalonnage avec au moins deux, de préférence au moins cinq, solutions de concentrations connues en polymères cibles en analysant chacune des solutions par spectrométrieet en reliant l'aire sous le pic du chromatogramme avec la concentration en polymères cibles ;
2) mettre en œuvre le procédé d'extraction selon l'une quelconque des revendications 1 à 6 sur un mélange d'hydrocarbures comprenant le(s) polymère(s) cible(s) par lequel une solution de polymère(s) cible(s) est obtenue ;
3) analyser la solution de polymère(s) cible(s) obtenue à l'étape 2) par spectrométrie ;
4) reporter l'aire sous la courbe du chromatogramme obtenue à l'étape 3) sur la courbe d'étalonnage de l'étape 1) ;
5) déterminer la concentration en polymère(s) cible(s) du mélange d'hydrocarbures.

8. Utilisation du polymère (P) tel que défini dans l'une quelconque des revendications 1 à 6 comme phase solide dans un procédé d'extraction en phase solide de polymères dans un mélange d'hydrocarbures.

9. Utilisation du polymère (P) tel que défini dans l'une quelconque des revendications 1 à 6 dans une méthode de détermination de la teneur en polymère(s) cible(s) dans un mélange d'hydrocarbures.

## Patentansprüche

1. Extraktionsverfahren von Zielpolymer(en), die in einem Kohlenwasserstoffgemisch enthalten sind, umfassend einen Schritt einer Festphasenextraktion des Kohlenwasserstoffgemischs, wobei die stationäre Phase der Festphasenextraktion ein Polymer (P) ist, das aus Methacrylsäure erlangt wird, wobei sich das Polymer (P) von einem geprägten Polymer unterscheidet.

2. Verfahren nach Anspruch 1, wobei das Zielpolymer keinen Schwefel enthält.

3. Verfahren nach Anspruch 1 oder 2, wobei die Zielpolymere eine Molmasse zwischen 500 und 4000 g/mol, vorzugsweise zwischen 1000 und 2000 g/mol, aufweisen.

4. Verfahren nach einem der Ansprüche 1 bis 3, wobei die Zielpolymere Polymere sind, die einen polaren, hydrophilen Kopf vorzugsweise kleiner Größe zwischen 15 und 150 g/mol, vorzugsweise zwischen 20 und 60 g/mol, und eine unpolare lipophile Kohlenwasserstoffkette umfassen.

5. Verfahren nach einem der Ansprüche 1 bis 4, wobei das Polymer (P) aus Methacrylsäure in Anwesenheit eines Vernetzungsmittels, und eines Initiators erlangt wird.

6. Verfahren nach einem der Ansprüche 1 bis 5, ferner umfassend die folgenden Schritte:
a) Bereitstellen einer Festphasenextraktionskartusche, umfassend das Polymer (P);
b) Verpacken der Kartusche;
c) Perkolieren des Kohlenwasserstoffgemischs, umfassend das/die Zielpolymer(e);
d) Waschen der Kartusche;
e) Eluieren der Kartusche.

7. Verfahren zum Bestimmen des Gehalts an Zielpolymeren in einem Kohlenwasserstoffgemisch, umfassend die folgenden Schritte:
1) Erstellen einer Kalibrierungskurve mit mindestens zwei, vorzugsweise mindestens fünf, Lösungen bekannter Konzentrationen an Zielpolymeren durch spektrometrische Analyse jeder der Lösungen und Verbinden der Fläche unter dem Peak in dem Chromatogramm mit der Konzentration an Zielpolymeren;
2) Durchführen des Extraktionsverfahrens nach einem der Ansprüche 1 bis 6 an einem Kohlenwasserstoffgemisch, umfassend das/die Zielpolymer(e), wodurch eine Lösung des/der Zielpolymer(s) erlangt wird;
3) Analysieren der in Schritt 2) erlangten Lösung des/der Zielpolymers/e durch Spektrometrie;
4) Übertragen der Fläche unter der Kurve des Chromatogramms, die in Schritt 3) erlangt wird, auf die Kalibrierungskurve von Schritt 1);
5) Bestimmen der Konzentration an Zielpolymer(en) in dem Kohlenwasserstoffgemisch.

8. Verwendung des Polymers (P), wie es in einem der Ansprüche 1 bis 6 definiert ist, als feste Phase in einem Verfahren zur Festphasenextraktion von Polymeren in einem Kohlenwasserstoffgemisch.

9. Verwendung von Polymer (P), wie es in einem der Ansprüche 1 bis 6 definiert ist, in einem Verfahren zur Bestimmung des Gehalts an Zielpolymer(en) in einem Kohlenwasserstoffgemisch.

## Claims

1. A method of extracting target polymer(s) included in a hydrocarbon mixture comprising a step of solid phase extraction of the hydrocarbon mixture, the stationary phase of the solid phase extraction being a polymer (P) obtained from methacrylic acid, said polymer (P) being different from an imprinted polymer.

2. The method according to claim 1, wherein the target polymer does not comprise sulphur.

3. The method according to claim 1 or 2, wherein the target polymers have a molar mass between 500 and 4,000 g/mol, preferably between 1,000 and 2,000 g/mol.

4. The method according to any one of claims 1 to 3, wherein the target polymers are polymers comprising a polar hydrophilic head, preferably of small size between 15 and 150 g/mol, preferably between 20 and 60 g/mol, and a non-polar hydrocarbon lipophilic chain.

5. The method according to any of claims 1 to 4, wherein the polymer (P) is obtained from methacrylic acid in the presence of a cross-linking agent, and an initiator.

6. The method according to any of claims 1 to 5, comprising the following steps:
a) providing a solid phase extraction cartridge comprising the polymer (P);
b) packaging the cartridge;
c) percolating the hydrocarbon mixture comprising the target polymer(s);
d) washing the cartridge;
e) elution of the cartridge.

7. A method of determining the content of target polymers in a hydrocarbon mixture comprising the following steps:
1) making a calibration curve with at least two, preferably at least five, solutions of known target polymer concentrations by analysing each of the solutions spectrometrically and relating the area under the peak of the chromatogram with the target polymer concentration;
2) carrying out the extraction process according to any one of claims 1 to 6 on a hydrocarbon mixture comprising the target polymer(s) whereby a solution of target polymer(s) is obtained;
3) analysing the solution of target polymer(s) obtained in step 2) by spectrometry;
4) plotting the area under the chromatogram curve obtained in step 3) on the calibration curve of step 1);
5) determining the concentration of the target polymer(s) in the hydrocarbon mixture.

8. Use of the polymer (P) as defined in any one of claims 1 to 6 as a solid phase in a method for the solid phase extraction of polymers in a hydrocarbon mixture.

9. Use of the polymer (P) as defined in any one of claims 1 to 6 in a method of determining the content of target polymer(s) in a hydrocarbon mixture.
